# EUROPÄISCHE PATENTSCHRIFT

(11) **EP 0 378 802 B1**
(45) Veröffentlichungstag und Bekanntmachung des Hinweises auf die Patenterteilung: **27.04.1994**
(21) Anmeldenummer: 89122761.3
(22) Anmeldetag: 09.12.1989
(51) Int. Cl.: B62D 53/08, B62D 47/02, F16F 9/12

(54) **Drehflügeldämpfer zur Regelung der Knickstabilität von Strassenfahrzeugen**
Rotary fin vane damper for controlling jack-knifing in articulated road vehicles
Amortisseur rotatif à ailettes pour régler la stabilité de flambage de véhicules routiers articulés

(30) Priorität: 20.01.1989 DE 3901541
(43) Veröffentlichungstag der Anmeldung: 25.07.1990
(73) Patentinhaber: MAN Nutzfahrzeuge Aktiengesellschaft, 80976 München (DE)
(72) Erfinder: Gusinde, Heinz, Dipl.-Ing.(FH), D-8061 Weichs (DE); Szabo, Zsolt, Dipl.-Ing.(TU), D-8000 München 40 (DE)

(56) Entgegenhaltungen:
- DE-A- 2 929 022
- DE-A- 3 340 446
- US-A- 3 749 420
- US-A- 4 706 984

## Beschreibung

Die Erfindung betrifft einen Drehflügeldämpfer zur Regelung der Knickstabilität von Straßenfahrzeugen mit mindestens zwei durch eine Gelenkeinheitverbundenen Fahrzeugteilen, mit im in Fahrzeugrichtung hintersten Fahrzeugteil angeordneten Fahrzeugantrieb, wobei der Drehflügeldämpfer als wartungsfreie, einbaufertige Baugruppe innerhalb der die zwei Fahrzeugteile miteinander verbindenden Kugel-Drehverbindung angeordnet ist und ein in sich geschlossenes, hydraulisches System mit einer hydraulischen Dämpfung und einem Endanschlag aufweist.

Gelenkomnibusse mit Heckmotor und Antrieb auf der Nachläuferachse - sogenannte gedrückte oder geschobene Systeme - benötigen für den Wintereinsatz eine Knickschutzeinlage. Darüber hinaus ist für solche Gelenkbuskonzeptionen, wegen besonderer Massenverteilung, insbesondere aber bei höheren Fahrgeschwindigkeiten, aus Stabilitätsgründen eine Dämpfung im Gelenkbereich erforderlich.

Der dafür notwendige hydraulische sowie elektronisch-elektrische Steuerungs- und Überwachungsaufwand bekannter Systeme ist erheblich. Abgesehen von der Störanfälligkeit in den umfangreich installierten elektrischen Anschlüssen und Bauteilen ist auch eine sehr zeitaufwendige und damit kostenintensive Einstell- und Abgleichprozedur erforderlich, die außerdem nur von geschultem Fachpersonal vorgenommen werden kann. Die Exporttauglichkeit eines solcherart ausgerüsteten Gelenkomnibusses ist dadurch sehr eingeschränkt. Gefragt sind daher einfache, überschaubare Knickschutzsysteme, die bei Bedarf auch von normalem Montagepersonal gewartet oder instandgesetzt werden können.

Mit den nun zwischenzeitlich vorliegenden Erkenntnissen aus dem Betriebseinsatz wird deutlich, daß auf die bisher übliche, aufwendige elektronisch-hydraulische Steuerung und Funktionsüberwachung verzichtet werden kann, wenn dem System für den normalen Fahrbetrieb eine hydraulische Dauerknickwinkeldämpfung zugeordnet bleibt, damit eine bestimmte Knickwinkelgeschwindigkeit nicht überschritten wird.

Es ist ein Drehgelenk mit einem Drehflügeldämpfer bekannt (DE 33 31 921 A1). Das Drehgelenk weist einen mit einem Fahrzeugteil verbundenen Zylinder auf, an dessen Innenwand radial nach innen gerichtete Anschlagstege ausgebildet sind. Diese liegen an einer koaxial im Zylinder angeordneten Welle an, an der sich radial bis zur Innenwand des Zylinders erstreckende Flügel derart ausgebildet sind, daß der zwischen der Innenwand und der Welle gebiildete kreisringförmige Hohlraum in durch die Anschlagstege und Flügel begrenzte Druckkammern unterteilt ist, die wechselseitig mit einem unter Druck stehenden Fluid der Steuereinrichtung beaufschlagbar sind.

Es ist ein weiteres Knickgelenk mit einem Drehflügeldämpfer zur Regelung der Knickstabilität nach der DE-A-33 40 446 bekannt, der als wartungsfreie, einbaufertige Einbaugruppe innerhalb der zwei Fahrzeugteile miteinander verbindenden Kugel-Drehverbindung angeordnet ist und ein in sich abgeschlossenes, hydraulisches System aufweist.

Der Erfindung liegt die Aufgabe zugrunde, eine einfache Vorrichtung zur Regelung der Knickstabilität unter Verzicht auf eine aufwendige elektronisch-hydraulische Steuerung und Funktionsüberwachung zu schaffen.

Dies wird erfindungsgemäß dadurch erreicht, daß das hydraulische System des Drehflügeldämpfers bei normalem Fahrbetrieb in einem bestimmten, nicht zu überschreitenden Knickwinkel-Geschwindigkeitsbereich eine progressive Dauerknickwinkeldämpfung mit Übergang in eine Konstantdämpfung aufweist bzw. in einem Knickwinkelgrenzbereich automatisch oder von Hand auf eine Konstantdämpfung umschaltbar ist, die deutlich höher als die Obergrenze der Progressivdämpfung ist. Auf diese Weise wird ein komplettes in sich geschlossenes, hydraulisches System realisiert, das die gesamten für die Sicherheit eines Gelenkzuges erforderlichen, voneinander abhängigen Gesetzmäßigkeiten enthält und zwar ohne einen Überbau von komplizierten elektronisch-elektrischen Vorrichtungen, wodurch Ausfälle minimiert werden und praktisch Wartungsfreiheit besteht. Dabei werden im Knickwinkelgrenzbereich über Nährungsschalter auf eine hohe Konstantdämpfung mit Druckbegrenzung geschaltet, um in den Knickwinkelendlagen den hydraulischen Endanschlag zu entlasten. Nach einer vorteilhaften Ausführungsform der Erfindung wird in schwierigen Anfahrsituationen die Konstantdämpfung automatisch aktiviert, indem sie direkt über eine vorhandene ASR-Vorrichtung mitgeregelt wird. Natürlich besteht bei Fahrzeugen ohne ABS-ASR-Regelung die Möglichkeit die Konstantdämpfung bei Bedarf vom Fahrer zu schalten.

Die Erfindung ist in einem Ausführungsbeispiel dargestellt. Es zeigen:
- Fig. 1: Die Seitenansicht eines Drehflügeldämpfers mit Einbindung in das Kugeldrehgelenk,
- Fig. 2: die Draufsicht eines Drehflügeldämpfers mit Einbindung in das Kugeldrehgelenk,

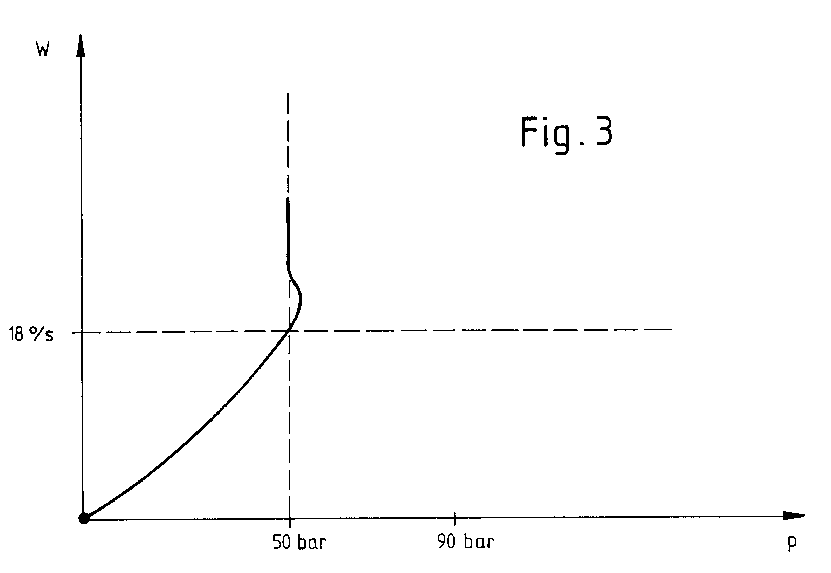

- Fig. 3: Schaubild einer Progressivdämpfung,
- Fig. 4: Schaubild einer Konstantdämpfung,

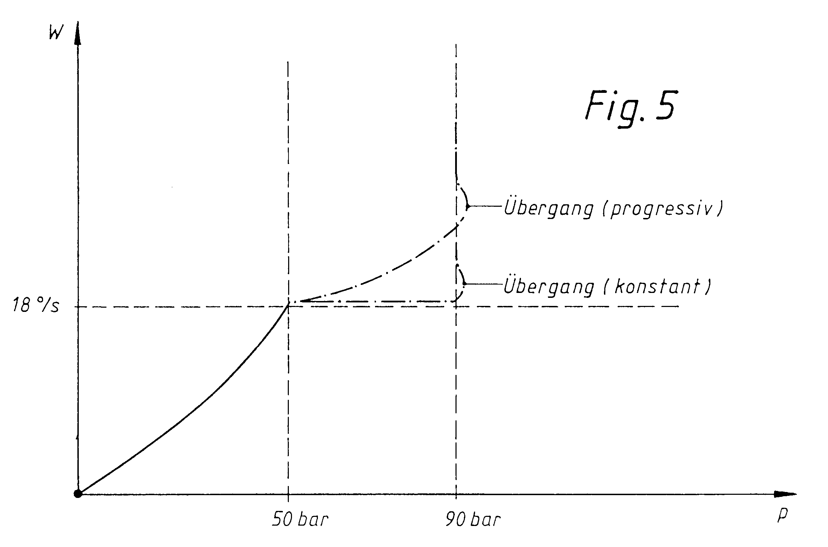

- Fig. 5: Schaubild einer kombinierten Progressiv/Konstantdämpfung.

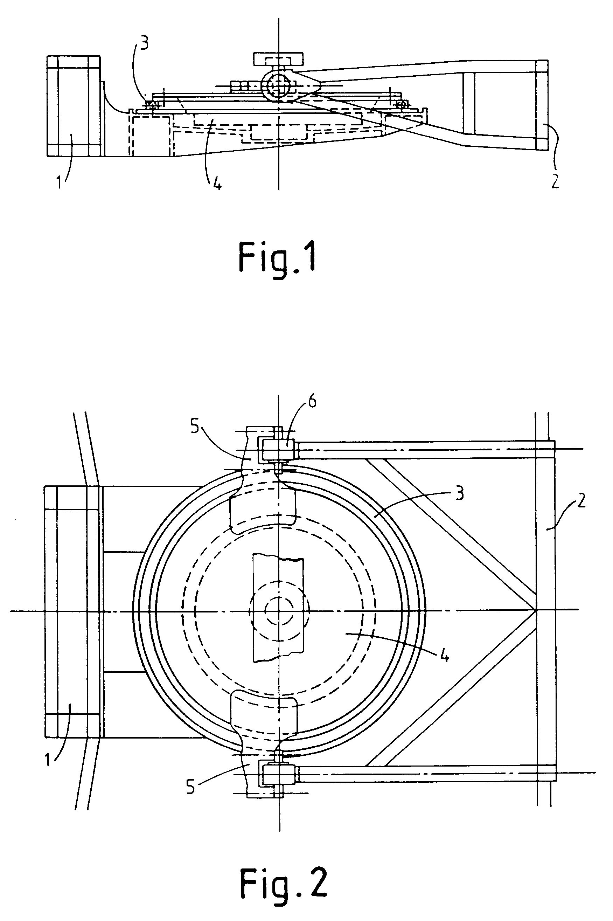

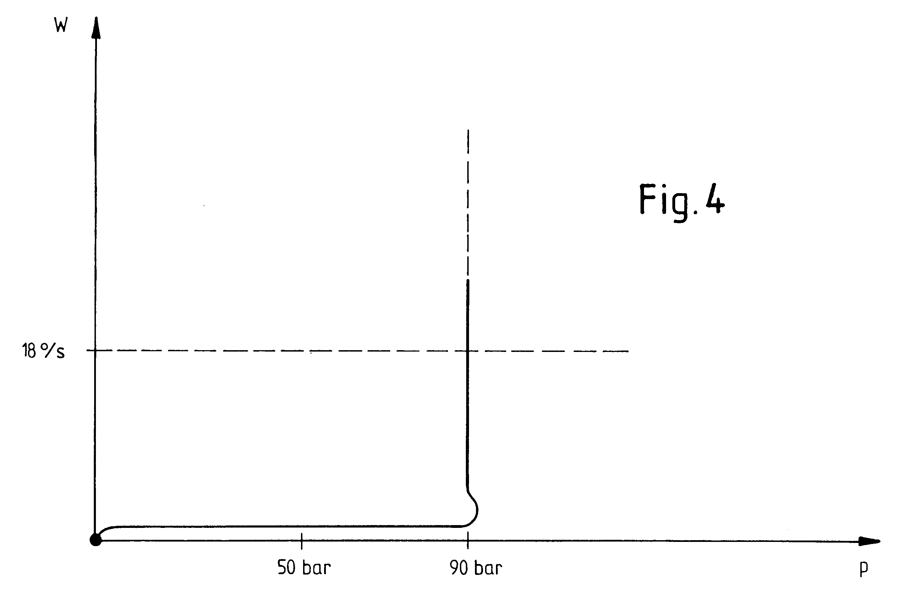

Die Figuren 1 und 2 zeigen die beiden Fahrzeugteile 1 und 2, nämlich den Vorderwagen und den Nachläufer, eines Gelenkzuges. Diese sind über eine Kugeldrehverbindung miteinander verbunden, innerhalb deren ein Drehflügel-Stoßdämpfer 4, als Drehschemel ausgebildet, angeordnet ist. Am Drehflügeldämpfer 4 sind, seitlich ausladend, Flansche 5 angebracht, vorzugsweise einstückig, die über Lager 6 mit dem Nachläufer 2 in Verbindung stehen. Aus dem Schaubild 3 ist die Wirkungsweise des Seitenansicht erkennbar, in der Darstellung der Abhängigkeit des Dämpfungsdruckes von der Knickwinkel-Geschwindigkeit, wobei im Ausführungsbeispiel einer Knickwinkel-Geschwindigkeit von 18° pro Sekunde ein Maximaldruck in der Progressivität von 50 bar zugeordnet ist. Diese Regelung erfolgt automatisch über ein im Inneren des Drehflügeldämpfers angeordnetes Drosselventil. Aus dem Diagramm der Fig. 4 ist ersichtlich, daß im Knickwinkel-Grenzbereich eine hohe Konstantdämpfung, im Ausführungsbeispiel bei 90 bar, wirksam gesetzt wird und zwar unabhängig von der Winkelgeschwindigkeit, so daß in der kritischen Situation der hydraulische Endanschlag nicht voll belastet, vielmehr durch das eingeschaltete, auf 90 bar begrenzte Druckbegrenzungsventil entlastet wird. Das Diagramm 5 zeigt eine knickwinkelgeschwindigkeitsabhängige Progressivdämpfung mit Übergang in eine druckabhängige Konstantdämpfung.

### Bezugszeichenliste

- 1: erster Fahrzeugteil (Vorderwagen)
- 2: zweiter Fahrzeugteil (Nachläufer)
- 3: Kugel-Drehverbindung
- 4: Drehflügeldämpfer
- 5: Befestigungsflansche
- 6: Lager

## Patentansprüche

1. Drehflügeldämpfer zur Regelung der Knickstabilität von Straßenfahrzeugen mit mindestens zwei durch eine Gelenkeinheit verbundenen Fahrzeugteilen, mit im in Fahrzeugrichtung hintersten Fahrzeugteil angeordnetem Fahrzeugantrieb, wobei der Drehflügeldämpfer als wartungsfreie, einbaufertige Baugruppe innerhalb der die zwei Fahrzeugteile miteinander verbindenden Kugel-Drehverbindung angeordnet ist und ein in sich abgeschlossenes, hydraulisches System mit einer hydraulischen Dämpfung und einem Endanschlag aufweist, dadurch gekennzeichnet, daß das hydraulische System des Drehflügeldämpfers (4) bei normalem Fahrbetrieb in einem bestimmten, nicht zu überschreitenden Knickwinkel-Geschwindigkeitsbereich eine progressive Dauerknickwinkeldämpfung mit Übergang in eine konstante Dämpfung aufweist bzw. in einem Knickwinkelbereich automatisch oder von Hand auf eine Konstantdämpfung umschaltbar ist, die deutlich höher als die Obergrenze der Progressivdämpfung liegt.

2. Vorrichtung nach Anspruch 1, dadurch gekennzeichnet, daß für die Progressivdämpfung ein Drosselventil vorgesehen ist.

3. Vorrichtung nach den Ansprüchen 1 bis 2, dadurch gekennzeichnet, daß für die Konstantdämpfung im Knickwinkelgrenzbereich ein Druckbegrenzungsventil vorgesehen ist.

4. Vorrichtung nach einem oder mehreren der Ansprüche 1 bis 3, dadurch gekennzeichnet, daß die Einschaltung der Konstantdämpfung über ein im Fahrzeug vorhandenes ASR-System erfolgt.

5. Vorrichtung nach einem oder mehreren der Ansprüche 1 bis 4, dadurch gekennzeichnet, daß die Einschaltung der Konstantdämpfung vom Fahrer manuel oder per Fuß aktivierbar ist.

6. Vorrichtung nach einem oder mehreren der Ansprüche 1 bis 5, dadurch gekennzeichnet, daß der Drehflügeldämpfer (4) seitliche Befestigungsflansche (5) zur Befestigung des Nachläufers (2) aufweist.

7. Vorrichtung nach einem oder mehreren der Ansprüche 1 bis 6, dadurch gekennzeichnet, daß ein über ein weiteres Druckbegrenzungsventil wirkender hydraulischer Endanschlag vorgesehen ist.

## Claims

1. Rotary wing damper for regulating the jackknife stability of road vehicles which have at least two vehicle parts connected by a joint unit and in which the vehicle drive unit is located in the rearmost part of the vehicle relative to the driving direction of the vehicle, the rotary wing damper being located within the ball bearing slewing rim in the form of a maintenance-free unit ready to be installed, which slewing rim connects the two vehicle parts with each other, and being equipped with a closed hydraulic system with hydraulic damping and a limit stop, characterised in that the hydraulic system of the rotary wing damper (4) carries out progressive permanent jackknife angle damping at normal driving operation and in a certain, not to be exceeded jackknife angle speed range with transition to constant damping and that the said hydraulic system can, in one jackknife angle range, be switched automatically or manually to a constant damping considerably higher than the upper limit of the progressive damping.

2. Device as under Claim 1, characterised in that a constriction valve is fitted for the progressive damping.

3. Device as under the Claims 1 to 2, characterised in that a pressure limiting valve is fitted for the constant damping in the critical jackknife angle range.

4. Device as under one or more of the Claims 1 to 3, characterised in that the constant damping mode is switched on via an ASR system in the vehicle.

5. Device as under one or more of the Claims 1 to 4, characterised in that the driver can switch on the constant damping mode either by hand or by foot.

6. Device as under one or more of the Claims 1 to 5, characterised in that the rotary wing damper (4) is equipped with lateral mounting flanges (5) to fasten the afterbody (2).

7. Device as under one or more of the Claims 1 to 6, characterised in that a hydraulic limit stop acting via another pressure limiting valve is provided.

## Revendications

1. Amortisseur rotatif à ailettes destiné au contrôle de la résistance au flambage de véhicules routiers constitués d'au moins deux éléments roulants réunis par une articulation et dont celui le plus en arrière, par rapport au sens de la marche, est équipé du train propulseur, l'amortisseur étant un ensemble monobloc sans entretien monté dans l'articulation de pivotement à billes reliant les deux éléments roulants et comprenant un système hydraulique à circuit fermé avec amortissement hydraulique et butée d'extrémité, caractérisé en ce que le système hydraulique de l'amortisseur (4), en circulation normale à l'intérieur d'une plage définie des vitesses de l'angle de flambage présente un amortissement permanent progressif avec passage à un amortissement constant c'est-à-dire qu'il peut être commuté, à l'intérieur d'une plage d'angle de flambage, automatiquement ou à la main, sur un amortissement constant d'un niveau nettement plus élevé que la limite supérieure de l'amortissement progressif.

2. Amortisseur selon la revendication 1, caractérisé en ce qu'il comporte une soupape d'étranglement assurant l'amortissement progressif.

3. Amortisseur selon les revendications 1 à 2, caractérisé en ce qu'il comporte une soupape de limitation de pression assurant l'amortissement constant dans la zone limite d'angle de flambage.

4. Amortisseur selon l'une ou plusieurs des revendications 1 à 3, caractérisé en ce que l'enclenchement de l'amortissement constant est produit pour le système ASR porté par le véhicule.

5. Amortisseur selon l'une ou plusieurs des revendications 1 à 4, caractérisé en ce que l'enclenchement de l'amortissement constant est produit par le conducteur, à la main ou au pied.

6. Amortisseur selon l'une ou plusieurs des revendications 1 à 5, caractérisé en ce que l'amortisseur (4) porte des brides latérales de fixation (5) servant à attacher la remorque (2).

7. Amortisseur selon l'une ou plusieurs des revendications 1 à 6, caractérisé en ce qu'il est équipé d'une butée hydraulique assurée par l'intermédiaire d'une seconde soupape de limitation de pression.
